# EUROPÄISCHE PATENTSCHRIFT

(11) **EP 3 837 196 B1**
(45) Veröffentlichungstag und Bekanntmachung des Hinweises auf die Patenterteilung: **10.09.2025**
(21) Anmeldenummer: 19750105.9
(22) Anmeldetag: 01.08.2019
(51) Int. Cl.: B65G 47/90, B65G 54/02

(54) **TRANSPORTVORRICHTUNG MIT TRANSPORTRECHEN UND GEGENRECHEN**
TRANSPORT DEVICE HAVING TRANSPORT RAKE AND COUNTER RAKE
DISPOSITIF DE TRANSPORT AVEC RÂTELIER DE TRANSPORT ET CONTRE-RÂTELIER

(30) Priorität: 16.08.2018 DE 102018213800
(43) Veröffentlichungstag der Anmeldung: 23.06.2021
(73) Patentinhaber: Bausch + Ströbel SE + Co. KG, 74532 Ilshofen (DE)
(72) Erfinder: WALLISCH, Manuel, 74541 Vellberg (DE)
(74) Vertreter: Weickmann & Weickmann PartmbB
(86) Internationale Anmeldenummer: PCT/EP2019/070778
(87) Internationale Veröffentlichungsnummer: WO 2020/035324

(56) Entgegenhaltungen:
- EP-A1- 2 743 192
- CN-A- 106 743 545
- CN-U- 201 702 778
- CN-U- 202 244 171
- DE-A1- 102014 102 630
- DE-A1- 102015 224 874
- DE-A1- 19 936 255
- ES-A1- 2 667 440
- JP-A- H03 270 828
- US-A1- 2009 313 955

## Beschreibung

Die Erfindung betrifft eine Transportvorrichtung für ein Transportgut umfassend einen Transportrechen mit mindestens einem Zinken und einen Gegenrechen mit mindestens einem Zinken, wobei der Gegenrechen in Transportrichtung relativ zu den Transportrechen verstellbar ist, um ein Transportgut zwischen dem mindestens einen Zinken des Transportrechens und dem mindestens einem Zinken des Gegenrechens zu klemmen.

Eine solche gattungsgemäße Transportvorrichtung ist aus der EP 3 072 834 A1 bekannt. Ebenfalls sei auf die EP 2 743 192 A1, die CN 201 702 778U, die DE 199 36 255 A1, die DE 10 2015 224874 A1 und die JP H03 270828A und die CN 106 743 545 A verwiesen, die ebenfalls derartige Transportvorrichtungen lehren. Dazu offenbart CN 106 743 545 A eine Transportvorrichtung nach dem Oberbegriff des Anspruchs 1.

Die vorliegende Anmeldung betrifft hinsichtlich der Ausgestaltung einiger Ausführungsformen Merkmale, die in der Beschreibung, den Ansprüchen und den Figuren der deutschen Anmeldung mit dem Aktenzeichen DE 10 2018 211 839.6 offenbart sind.

Bei Befüllvorgängen bzw. Herstellung von entsprechenden Produkten müssen häufig eine Vielzahl von kleinen Behältern präzise bewegt werden, beispielsweise unter Füllnadeln einer Füllstation. Insbesondere im Bereich der Herstellung von pharmazeutischen Produkten werden Vials, Spritzen, kleine Fläschchen und Ähnliches im Allgemeinen in Reinräumen und im sterilisierten Zustand befüllt. Befüllstationen und auch andere Bearbeitungsstationen, wie beispielsweise Verschlussstationen bearbeiten bzw. befüllen bzw. verschließen dabei im allgemeinen einen oder eine kleinere Anzahl von Behältern, beispielsweise zehn. Insgesamt muss aber eine entsprechende Vorrichtung für die wirtschaftliche Effizienz mehrere tausend solcher kleinen Behälter pro Stunde bearbeiten.

Entsprechend gibt es Notwendigkeit, die kleinen Behälter in Gruppen oder einzeln innerhalb des Reinraums möglichst effizient zu bewegen, wobei insbesondere Reibung zu minimieren ist. Denn bei jeder Reibung gibt es Materialabrieb, wodurch sich die Reinraumqualität verschlechtern kann.

Die EP 3 072 834 A1 schlägt hierfür eine Transportvorrichtung mit Transportrechen und Gegenrechen vor, wobei bei entsprechender Relativbewegung von Transportrechen und Gegenrechen Behälter zwischen jeweiligen Zinken geklemmt werden und leicht angehoben werden, woraufhin eine Simultanbewegung von Transportrechen und Gegenrechen die Behälter in die gewünschte Richtung weiter bewegen kann.

Dabei werden Transportrechen und Gegenrechen durch jeweils fest installierte Antriebsanordnungen angetrieben bzw. bewegt, wobei der Transportrechen bzw. der Gegenrechen jeweils mittels eines Hebels jeweils an einer angetriebenen Exzenterscheibe des jeweiligen Antriebs befestigt ist.

Nachteilig hieran ist unter anderem, dass damit der Bewegungsbereich und auch die Art der Bewegung für Transportrechen und Gegenrechen durch Größe und Form der Exzenterscheiben eindeutig fest vorgegeben sind. So gibt es in jeder Situation nur die Option, eine bogenförmige Bewegung mit dem Transportrechen bzw. dem Gegenrechen in die eine Richtung oder in die andere Richtung auszuführen. Insbesondere ist es nicht möglich, Behälter entlang einer Transportrichtung zu bewegen und dabei die Position der Behälter quer zu der Transportrichtung gleich zu lassen. Ferner müssen die Behälter mehrfach abgesetzt und wieder aufgenommen werden, um sie von der einen Seite des Transportrechens zur anderen Seite zu bewegen.

Darüber hinaus müssen bei Anwendung eines entsprechenden Transportrechens und Gegenrechens immer alle Objekte im Bereich von Transportrechen und Gegenrechen gleichzeitig bewegt werden, so dass ein fester Maschinentakt eingehalten werden muss.

Ferner ist eine aufwändige Mechanik nötig, um die passende Relativbewegung von Transportrechen und Gegenrechen sicherzustellen und insbesondere auch für den Fall, wenn man den eingeschränkten Bewegungsspielraum der Exzenterscheiben nicht eins zu eins auf Transportrechen und Gegenrechen übertragen möchte. Diese aufwändige Mechanik ist darüber hinaus noch im Reinraum anzuordnen. Tritt eine Fehlfunktion auf, muss der Reinraum entsprechend geöffnet werden und anschließend erneut sterilisiert werden. Dabei muss die Produktion insgesamt für einen längeren Zeitraum gestoppt werden.

Die Aufgabe vorliegender Erfindung ist es somit, die Nachteile des bekannten Transportsystems zu überwinden oder zu minimieren.

Diese Aufgabe wird gelöst durch eine Transportvorrichtung gemäß Anspruch 1 sowie ein System gemäß Anspruch 8, sowie ein Verfahren gemäß Anspruch 11.

Die erfindungsgemäße Transportvorrichtung zeichnet sich dadurch aus, dass mindestens entweder der Transportrechen oder der Gegenrechen mit einem für eine rein lineare Bewegung in oder gegen Transportrichtung geeigneten beweglichen Transportelement verbunden ist, wobei ein Antriebssystem vorgesehen ist, mit dem das Transportelement in einer rein linearen Weise in oder gegen die Transportrichtung bewegbar ist.

Dadurch ist ein größerer Bewegungsspielraum gegeben, da dieser sich nunmehr nach dem Bewegungsspielraum richtet, der durch das Antriebssystem gegeben ist. Ferner wird eine komplizierte Antriebsmechanik vermieden oder befindet sich wenigstens in gewisser Entfernung von Rechen und Gegenrechen. Dies vermindert die Wartungshäufigkeit und erleichtert die Wartung.

Erfindungsgemäß zeichnet sich die erfindungsgemäße Transportvorrichtung dadurch aus, dass mindestens entweder der Transportrechen oder der Gegenrechen mit zwei für eine rein lineare Bewegung in oder gegen Transportrichtung geeigneten und relativ zueinander beweglichen Transportelementen verbunden ist, wobei ein Antriebssystem vorgesehen ist, mit dem die Transportelemente in einer rein linearen Weise in oder gegen die Transportrichtung bewegbar sind.

Sowohl Transportrechen als auch Gegenrechen sind mit mindestens einem entsprechenden Transportelement verbunden und sind bevorzugt ebenfalls mit keiner anderen Antriebsvorrichtung außer entsprechenden Transportelementen verbunden.

Dadurch sind Transportrechen und Gegenrechen wenigstens linear entlang der Transportrichtung beweglich, insoweit die Transportelemente mittels des Antriebssystems entlang der Transportrichtung beweglich sind. Damit können insbesondere entsprechende Behälter entlang der Transportrichtung transportiert werden, ohne dass diese ständig abgesetzt und neu gegriffen werden müssen.

Bevorzugt ist ein entsprechender Rechen mit mindestens zwei Transportelementen verbunden, wobei diese relativ zueinander beweglich sind. Neben einer besseren Stützung des Transportrechens und damit einer größeren möglichen Länge des Rechens können durch eine passende Verbindung von Transportelementen und Rechen mittels der Relativbewegung der Transportelemente eines Transportrechens zueinander Bewegungsabläufe realisiert werden, die nicht oder nicht nur eine lineare Verschiebung entlang der Transportrichtung umfassen.

Je nach Verbindungsaufbau kann damit eine Verschiebung des Rechens und/oder der Zinken quer zur Transportrichtung bewirkt werden oder auch eine Verkippung oder Verdrehung des Transportrechens. Ebenfalls könnten auf diese Weise andere Funktionselemente am Rechen aktivierbar sein. Bevorzugt ist beispielsweise jedes Transportelement mittels zweier gelenkig an Transportelement und Rechen angebrachter Gelenkstangen befestigt. Der relative Abstand zwischen den beiden Transportelementen des Rechens bestimmt dann in einfacher Weise, wie weit der Rechen von den Transportelementen entfernt ist und damit die Position des Transportrechens und der Zinken quer zur Transportrichtung.

Damit kann der Rechen und dann natürlich in vergleichbarer Weise der Gegenrechen quer zur Transportrichtung vor und zurück gefahren werden, womit entsprechende Behälter in einem größeren Bereich greifbar sind und womit insbesondere gerade nicht zu transportierende Behälter etwas entfernter von den Transportelementen abgestellt werden können. Damit könnten andere Behälter entlang der Transportrichtung an diesen Behältern vorbei transportiert werden.

Erfindungsgemäß sind sowohl Transportrechen als auch Gegenrechen mit mindestens zwei der Transportelemente verbunden, bevorzugt jeweils mit verschiedenen Transportelementen.

Erfindungsgemäß sind die Transportelemente von Transportrechen und Gegenrechen auf versetzt parallel verlaufenden Strecken in Transportrichtung beweglich. Damit beschränken die Transportelemente von Transportrechen und Gegenrechen sich nicht gegenseitig in ihrem Bewegungsbereich.

Eine solche Beweglichkeit auf versetzt verlaufenden Strecken ist insbesondere auch dadurch realisierbar, dass die Transportelemente nicht nur linear beweglich sind, sondern auf einer ganzen Fläche, die parallel zur Transportrichtung ist, bzw. orthogonal zur Transportrichtung beweglich sind. Dies ist beispielsweise realisierbar indem die Transportelemente mit drehbaren Rollen entsprechend den entsprechenden Merkmalen in der Anmeldung DE 10 2018 211 839.6 ausgebildet sind. Damit können dann die Transportelemente von Transportrechen und Gegenrechen nach "oben" und "unten" auseinanderfahren und dann aneinander vorbeibewegt werden.

In einer bevorzugten Ausführungsform sind Transportrechen und Gegenrechen derart miteinander verbunden, dass eine Relativbewegung zueinander möglich ist. Dies kann beispielsweise realisiert sein, indem einer von beiden einen sich entlang der Transportrichtung erstreckenden Schlitz aufweist, in dem ein Vorsprung oder Ähnliches des anderen beweglich gelagert ist. Aber auch andere Ausführungen sind denkbar, beispielsweise ineinandergreifende Schiene und Gegenschiene an Transportrechen und Gegenrechen und/oder Rollen/Walzen oder Ähnliches an einem und Laufläche am anderen Rechen. Dies kann vorteilhaft sein, da es den Bewegungsspielraum und damit die Nutzung von Transportrechen und Gegenrechen vergrößert. Gleichzeitig können sich Transportrechen und Gegenrechen dabei gegenseitig stützen bzw. in der Position stabilisieren.

Es ist aber alternativ in einer anderen bevorzugten Variante vorgesehen, dass Transportrechen und Gegenrechen nicht miteinander verbunden sind. Dies kann beispielsweise erfolgen in dem beide mit leichtem Abstand übereinander angeordnet sind und die Zinken gerade so in der Höhe angeordnet sind, dass sie sich aneinander vorbei bewegen können und gleichzeitig einen Behälter dazwischen klemmen können.

Die Variante mit nicht miteinander verbundenen Transportrechen und Gegenrechen kann besonders bevorzugt genutzt werden in Kombination mit auf unterschiedlichen Strecken verlaufenden Transportelementen von Transportrechen und Gegenrechen. Denn dann sind Transportrechen und Gegenrechen vollständig aneinander vorbei bewegbar, so dass die Anzahl der geklemmt Transportgüter frei wählbar ist (da je nach relativer Position entsprechend viele Zinken des Transportrechen überhaupt mit Zinken des Gegenrechens wechselwirken können) oder Transportrechen bzw. Gegenrechen können auch mit anderen und äquivalent aufgebauten Gegenrechen bzw. Transportrechen zusammenwirken.

Bei der Variante mit nicht verbundenen Transportrechen und Gegenrechen können die Zinken aber auch so angeordnet werden, dass sie jeweils auf gleicher Höhe sind. In der Variante mit nicht nur linear sondern zweidimensional beweglichen Transportelementen, lassen sich dann Transportrechen und Gegenrechen immer noch voneinander trennen und aneinander vorbeibewegen, indem die Transportelemente entsprechend passend orthogonal zur Transportrichtung verfahren werden.

Bevorzugt umfassen Transportrechen und/oder Gegenrechen eine sich parallel zur Transportrichtung erstreckende Halterungsstange, von der aus sich bevorzugt die Zinken orthogonal zur Transportrichtung erstrecken.

Dies ist ein relativ einfacher Aufbau ohne komplizierte Mechanik. Besonders vorteilhaft ist dieser in Kombination mit der Verbindung der Transportelemente mit Transportrechen bzw. Gegenrechen über angelenkte Gelenkstangen. Denn es handelt sich dann um eine einfache Konstruktion, die gleichzeitig mittels einer relativen Verschiebung von mehreren Transportelementen des Transportrechens bzw. des Gegenrechens zueinander eine präzise Positionierung von Transportrechen bzw. Gegenrechen quer zur Transportrichtung erlaubt.

Bevorzugt, insbesondere in der Variante mit Gelenkstangen zwischen Transportelementen und Transportrechen bzw. Gegenrechen, sind die Transportelemente in der Art relativ zueinander beweglich ausgebildet, dass der Abstand von Zinken und/oder Halterungsstange zu den Transportelementen veränderbar ist. Bevorzugt, insbesondere in der Variante mit Gelenkstangen zwischen Transportelementen und Transportrechen bzw. Gegenrechen, sind die Transportelemente in der Art miteinander synchron beweglich ausgebildet, dass Zinken und/oder Halterungsstange entlang der Transportrichtung und entgegen die Transportrichtung bewegbar sind, insbesondere in der Art bewegbar, dass sich dabei der Abstand von Zinken und/oder Halterungsstange zu den Transportelementen dabei konstant bleibt.

Bevorzugt sind beide zuvor genannte Aspekte kombiniert, so dass Objekte in unterschiedlichem Abstand von den Transportelementen durch die Klinken klemmbar und/oder entlang der Transportrichtung bewegbar sind. Bevorzugt ist dies so ausgeführt, dass die Zinken durch nahe Positionierung an den Transportelementen an entsprechend weiter weg positionierten Objekten vorbeiführbar sind, dann der Abstand zwischen Zinken und Transportelementen vergrößert werden kann, um die Objekte zu klemmen, und anschließend die geklemmten Objekte in diesem Abstand in und/oder gegen Transportrichtung bewegbar sind und/oder die Objekte an die Transportelemente heranbewegt werden können, um mit geringerem Abstand als der Abstand vor der Klemmung durch die Zinken in oder gegen Transportrichtung bewegbar zu sein, um insbesondere an nicht durch die Zinken geklemmten Objekten vorbeibewegt zu werden.

Ausführungsbeispiele/-formen für diese bevorzugten Varianten finden sich insbesondere in den beigefügten Figuren und der zugehörigen Beschreibung. Jedoch sind diese bevorzugten Varianten nicht auf die in den Figuren gezeigten Ausführungsformen beschränkt.

Bevorzugt weisen die Zinken einen länglichen und orthogonal zu Halterungsstange angeordneten Halterungsstangenabschnitt und einen Aufnahmebereich auf, in dem sich die Zinken in einer Richtung orthogonal zu Transportrichtung und orthogonal zum Halterungsstangenabschnitt verjüngen. Dadurch ist beim Zusammenwirken von Zinken von Transportrechen und Gegenrechen eine sich verjüngende Aufnahme ausgebildet, in der Transportgut gut zu haltern ist.

Durch geeignete Wahl der Form dieser Verjüngung findet auch durch Bewegungen von Transportrechen und Gegenrechen zueinander unmittelbar ein leichtes Anheben des aufzunehmenden Transportguts statt.

Damit ist dann mit einfachen Mitteln sichergestellt, dass bei Bewegung des Transportguts entlang der Transportrichtung kein Schleifen an einer Fläche auftritt, auf der das Transportgut abgestellt ist.

Erfindungsgemäß umfasst das Antriebssystem ein entsprechendes Antriebselement, mit dem das Transportelement nicht verbunden ist und mit dem bzw. von dem das Transportelement nur mittels berührungsloser Distanzkräfte gekoppelt bzw. angetrieben ist. Dann bestimmt der Bewegungsspielraum des Antriebselements den des Transportelements. Ferner kann die Antriebsmechanik mit gewisser Distanz zum Transportelement angeordnet werden, womit die Wartbarkeit erleichtert ist.

Erfindungsgemäß umfasst das Antriebssystem einen Linearantrieb. In unterschiedlichen Ausführungsformen kann auch eine Fläche, Schiene und/oder ähnliches, auf oder an der sich die Transportelemente bewegen, verschiedene Orientierungen gegenüber der Transportrichtung aufweisen, wobei bevorzugt sich die Fläche, Schiene und/oder ähnliches parallel zu der Transportrichtung erstreckt.

Die Fläche, Schiene und/oder Ähnliches, auf oder an der sich die Transportelemente bewegen, kann insbesondere auch parallel oder orthogonal zu einer Fläche sein, auf der zu transportierende Objekte abgestellt sind. Aber auch andere Orientierungen sind denkbar, da durch die Verbindung von Transportelement und Transportrechen bzw. Gegenrechen, insbesondere die Gelenkstangen, mit einem entsprechenden Winkel verbindbar sind, der einen Winkel zwischen Fläche, Schiene und/oder Ähnlichem der Transportelemente und einer Fläche, auf der zu transportierende Objekte platziert sind und/oder zu platzieren sind, kompensiert.

Ein erfindungsgemäßes System umfasst eine Transportvorrichtung nach einem der vorhergehenden Ansprüche und einen Reinraum, wobei Transportrechen, Gegenrechen und Transportelemente innerhalb des Reinraums angeordnet sind.

Bevorzugt ist bei einem solchen System vorgesehen, dass das oder die Antriebselemente der Transportvorrichtung außerhalb des Reinraums angeordnet sind.

Damit ist die gesamte Antriebsmechanik zur Bewegung des Antriebselements außerhalb des Reinraums vorgesehen, womit eine einfache Wartbarkeit erreicht ist und gleichzeitig das Antriebssystem des Antriebselements keine Verschlechterung der Reinraumqualität bewirken kann.

Besonders bevorzugt können in einem solchen System mit Reinraum und Antriebselement außerhalb des Reinraums und Transportrechen, Gegenrechen und Transportelement innerhalb des Reinraums Transportelement und Antriebselement entsprechend irgendeiner der in der Anmeldung DE 10 2018 211 839.6 dargestellten Form ausgebildet sein.

Besonders bevorzugt umfasst ein erfindungsgemäßes System mehrere Transportvorrichtungen von einer oder mehreren der zuvor geschilderten Varianten.

Ein erfindungsgemäßes Verfahren zum Betrieb einer erfindungsgemäßen Transportvorrichtung bzw. zum Betrieb eines erfindungsgemäßen Systems betrifft solche erfindungsgemäßen Transportvorrichtungen und/oder Systeme, bei denen mindestens entweder der Transportrechen oder der Gegenrechen mit zwei für eine rein lineare Bewegung in oder gegen Transportrichtung geeigneten beweglichen Transportelementen verbunden sind. Das erfindungsgemäße Verfahren dient dazu mindestens ein Objekt und/oder ein Transportgut zu bewegen, das auf einer Transportfläche ist, wobei die Transportfläche bevorzugt orthogonal zur Transportrichtung beabstandet zu einem Bereich ist, zu dem die Transportelemente hin bewegbar sind, Das erfindungsgemäße Verfahren zeichnet sich dadurch aus, dass für den Transport eines Transportgutes zwischen Anfahren des zu transportierenden Transportgutes und Freigeben des Transportgutes sowohl synchrone Bewegungen der zwei Transportelemente von Transportrechen und/oder Gegenrechen erfolgen als auch relative Bewegungen zueinander und/oder das in mindestens einem zwischen Beginn und Ende des Verfahrens ausgeführten Schritt eine synchrone Bewegung der Transportelemente von Transportrechen und/oder Gegenrechen in und/oder gegen die Transportrichtung erfolgt und in mindestens einem zwischen Beginn und Ende des Verfahrens ausgeführten Schritt eine relative Bewegung der Transportelemente von Transportrechen und/oder Gegenrechen zueinander erfolgt.

Mit anderen Worten, ein erfindungsgemäßes Verfahren zeichnet sich dadurch aus, dass sowohl synchrone als auch relative Bewegungen zueinander der Transportelemente im Verfahren genutzt werden.

Bevorzugt umfasst das erfindungsgemäße Verfahren einen, mehrere oder alle der Schritte, bevorzugt in alphabetischer Reihenfolge:
a) synchrone und/oder parallele Bewegung der zwei Transportelemente von Transportrechen und/oder Gegenrechen bis die Zinken benachbart zu dem Transportgut sind und/oder in einem Bereich zwischen Transportgut und Transportrechen und/oder Gegenrechen und/oder Transportelementen sind;
b) relative Bewegung der zwei Transportelemente von Transportrechen und/oder Gegenrechen zueinander bis die Zinken einen Abstand von den Transportelementen haben, der dem Abstand zwischen Transportgut und Transportelementen entspricht;
c) relative Bewegung der der zwei Transportelemente von Transportrechen und/oder Gegenrechen zueinander bis die Zinken das Transportgut klemmen;
d) relative Bewegung der der zwei Transportelemente von Transportrechen und/oder Gegenrechen zueinander bis der Abstand von Transportgut und/oder der Zinken zu den Transportelementen einen gewünschten Wert erreicht, bevorzugt einen Wert so dass die Zinken nicht mit weiterem auf der Transportfläche befindlichen Transportgut kollidieren können;
e) synchrone und/oder parallele Bewegung der zwei Transportelemente von Transportrechen und/oder Gegenrechen bis die Zinken benachbart zu einer Abstellfläche oder einem Bereich der Transportfläche, auf der das Transportgut abzustellen ist, oder zu einer Übergabe- und/oder Arbeitsstation sind, an oder in der das Transportgut zu übergeben und/oder zu bearbeiten und/oder abzustellen ist, oder zu einem Übergabebereich sind, in dem das Transportgut zu übergeben und/oder zu bearbeiten und/oder abzustellen ist;
f) relative Bewegung der zwei Transportelemente von Transportrechen und/oder Gegenrechen zueinander bis das Transportgut benachbart und/oder über der Abstellfläche, dem Bereich der Transportfläche, der Übergabe- und/oder Arbeitsstation und/oder dem Übergabebereich ist;
g) relative Bewegung der zwei Transportelemente von Transportrechen und/oder Gegenrechen zueinander bis das Transportgut freigegeben ist; und
h) relative Bewegung der zwei Transportelemente von Transportrechen und/oder Gegenrechen zueinander bis die Zinken nah genug an den Transportelemente sind, um eine Kollision mit dem Transportgut und/oder anderen Elementen zu vermeiden;,
wobei bevorzugt nach Schritt h) Schritt a) wieder ausgeführt wird bezüglich eines weiteren Transportguts, wobei die Schritte bevorzugt auf mehrere Transportgüter gleichzeitig angewendet werden, um mehrere Transportgüter gleichzeitig zu bewegen.

Unter einer synchronen und/oder parallelen Bewegung von zwei Transportelementen ist dabei so zu verstehen, dass sich beide Transportelemente so bewegen, dass ihr Abstand zueinander gleich bleibt. Unter einer relativen Bewegung und/oder einer Relativbewegung von zwei Transportelementen ist dabei so zu verstehen, dass sich beide Transportelemente so bewegen, dass sich ihr Abstand zueinander ändert, wenigstens vorübergehend.

Anhand der nachfolgenden Figuren wird ein bevorzugtes Ausführungsbeispiel der Erfindung erläutert. Alle in diesem Zusammenhang erläuterten Bewegungsvorgänge können jeweils für sich, aber bevorzugt in Kombination, teil des erfindungsgemäßen Verfahrens sein.
- Figur 1: zeigt in schematischer Draufsicht einen Transportrechen mit damit verbundenen Transportelementen für eine erfindungsgemäße Transportvorrichtung.
- Figur 2: zeigt in schematischer Draufsicht den zugehörigen Gegenrechen mit Transportelementen.
- Figuren 3a bis 3c: zeigen in schematischer Draufsicht eine erfindungsgemäße Transportvorrichtung beim Vorgang des Greifens/Klemmens eines Behälters.
- Figur 4: zeigt in schematischer Draufsicht eine erfindungsgemäße Transportvorrichtung mit einer anderen Variante des Antriebssystems.

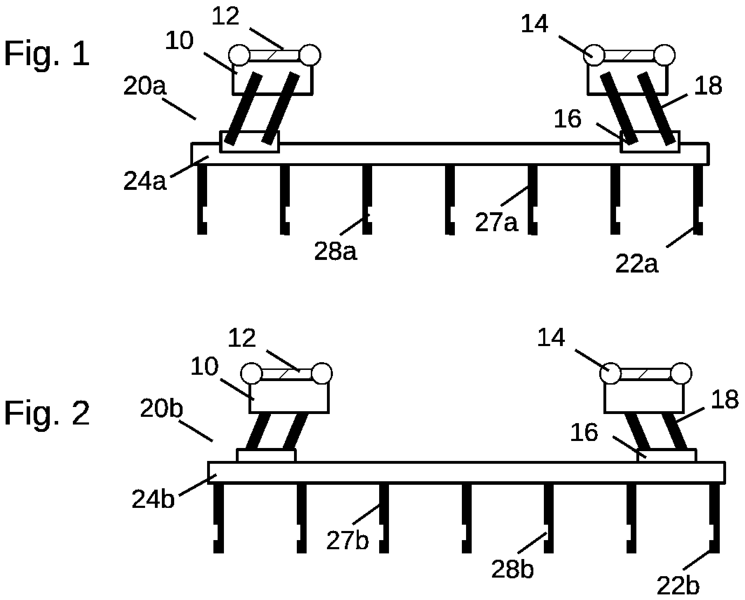

Eine erfindungsgemäße Transportvorrichtung umfasst einen Transportrechen 20a und einen Gegenrechen 20b. Der in Figur 1 gezeigte Transportrechen 20a ist ausgelegt für einen Transport in einer Richtung entlang bzw. parallel zu der sich länglich erstreckenden Halterungsstange 24a des Transportrechens 20a.

Von diesem aus erstrecken sich die Zinken 22a quer zur Transportrichtung. Die Zinken 22a weisen einen länglichen Halterungsstangenabschnitt 27a auf, in dem ein Aufnahmebereich 28a ausgebildet ist. Dieser Aufnahmebereich 28a ist bevorzugt senkrecht zur Bildebene in Figur 1 in einer Richtung verjüngt ausgebildet. Dadurch entsteht eine Schrägfläche, durch die der Aufnahmebereich 28a beim Einwirken auf ein entsprechendes Objekt dieses leicht nach oben drücken kann.

Der Gegenrechen 20b ist in dem Ausführungsbeispiel der Erfindung mit sich parallel zur Transportrichtung erstreckender Halterungsstange 24b, Zinken 22b mit länglichem Halterungsstangenabschnitt 27b und Aufnahmebereich 28b darin im Wesentlichen identisch zum Transportrechen 20a aufgebaut abgesehen von der anderen Ausrichtung des Aufnahmebereichs 28b. Allerdings ist auch ein anderer Aufbau möglich, solange eben entsprechende Zinken des Gegenrechens mit den Zinken des Transportrechens zum Klemmen eines Objektes oder Transportguts zusammenwirken können.

Erfindungsgemäß ist sowohl der Transportrechen 20a als auch der Gegenrechen 20b jeweils mit zwei linear in Transportrichtung beweglichen Transportelementen 10 verbunden. Die Transportelemente 10 umfassen eine Magnetvorrichtung 12 und Rollen 14. Mit den Rollen 14 fahren die Transportelemente 10 bevorzugt auf einer ebenen Fläche oder Wandung, wobei auf der anderen Seite der Wandung Antriebselemente angeordnet sind, die ebenfalls über Magnetvorrichtungen verfügen, womit die Antriebselemente über ihre Magnetvorrichtungen mit den Magnetvorrichtungen 12 der Transportelemente 10 gekoppelt sind und somit eine Bewegung der Antriebselemente zu einer Bewegung der Transportelemente 10 führt.

Die Transportelemente 10 sind drehbar gelenkig mit den Gelenkstangen 18 verbunden, die wiederum drehbar gelenkig mit dem Verbindungsstück 16 verbunden sind. Diese Verbindungsstücke 16 sind wiederum mit der jeweiligen sich parallel zur Transportrichtung erstreckenden Halterungsstange 24a bzw. 24b verbunden. Dabei sind die Verbindungsstücke 16, die mit dem Transportrechen 20a verbunden sind, an der Oberseite der Halterungsstangen 24a angebracht, während die Verbindungsstücke 16, die mit dem Gegenrechen 20b verbunden sind, an der Unterseite der entsprechenden Halterungsstange 24b angebracht sind.

Dadurch befindet sich beim Transportrechen 20a nichts unterhalb der Halterungsstange 24a und beim Gegenrechen 20b nichts oberhalb der Halterungsstange 24b. Dadurch lassen sich die Halterungsstangen 24a und 24b mit knappem Abstand zueinander übereinander anordnen, so dass sich die Zinken 22a und 22b nahezu auf der gleichen Höhe befinden. Alternativ kann auch ein vertikaler Versatz in den Zinken 22a und 22b und/oder im Bereich der länglichen Halterungsstangenabschnitt 27a und 27b vorgesehen sein, so dass die Aufnahmebereiche 28a und 28b vollständig auf der gleichen Höhe sind.

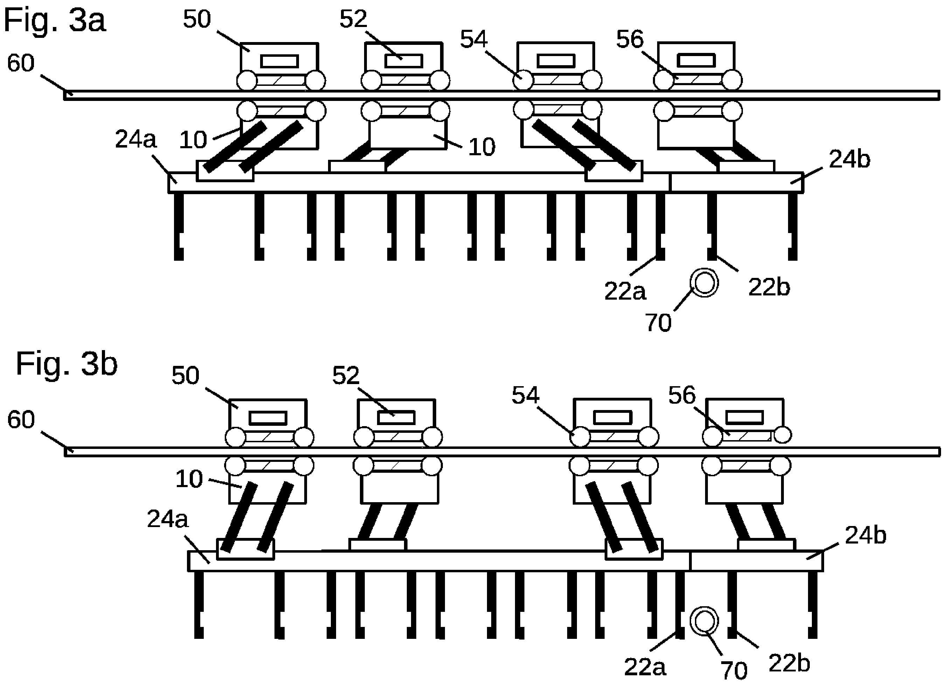

Eine Anordnung mit Halterungsstangen 24a, 24b nah übereinander ist in Figur 3a gezeigt, bei der die Halterungsstange 24b des Gegenrechens 20a in Draufsicht größtenteils durch die Halterungsstange 24a des Transportrechens 20a verdeckt ist. Dabei sind die Transportelemente 10 des Transportrechens 20a bzw. des Gegenrechens 20b so alternierend angeordnet, dass Transportrechen 20a und Gegenrechen 20b nicht einfach durch Bewegungen der Transportelemente 10 trennbar sind, jedenfalls wenn sich die Transportelemente 10 auf der gleichen Strecke und nicht auf versetzt parallel verlaufenden Strecken bewegen. Bevorzugt sind dann auch die Zinken 22a und 22b so ausbildet, z.B. mit Versatzstücken, dass sie auf gleicher Höhe liegen.

Im Ausführungsbeispiel fahren die Transportelemente 10 auf der Wandung 60, die beispielsweise eine Außenwandung eines Reinraums ist, so dass sich Transportrechen 20a und Gegenrechen 20b innerhalb eines Reinraums befinden, während die ebenfalls zum Ausführungsbeispiel der erfindungsgemäßen Transportvorrichtung gehörenden Antriebselemente 50 außen auf der Wandung 60 und damit außerhalb des Reinraums fahren bzw. sich bewegen.

Die Antriebselemente 50 weisen einen Motor 52 auf, der die Rollen bzw. Räder 54 antreibt. Aufgrund der Koppelung der Antriebselemente 50 mittels der Magnetvorrichtungen 56 an die Magnetvorrichtungen 12 der Transportelemente 10 werden die Bewegungen der Antriebselemente 50 auf die Transportelemente 10 übertragen.

Die Antriebselemente 50 verfügen ebenfalls über eine nicht gezeigte Steuerung und Batterien, Akkus oder ähnliche Energiespeicher. Mittels dieser programmierbaren und/oder fernsteuerbaren Steuerungen werden die eigentlich unabhängig voneinander beweglichen Antriebselemente 50 koordiniert bewegt, um gewünschte Bewegungen der Transportelemente 10 und damit von Transportrechen 20a und Gegenrechen 20b zu bewirken.

Die Magnetvorrichtungen 12 und 56 können dabei insbesondere in Form von Hallbach-Arrays ausgebildet werden, wie dies beispielsweise in der Anmeldung DE 10 2018 211 839.6 dargelegt ist.

In Figur 3a sind die Antriebselemente 50 so positioniert, dass die Zinken 22a und 22b des Transportrechen 20a bzw. des Gegenrechens 20b weit entfernt voneinander sind und so, dass die Halterungsstangen 24a und 24b relativ nah an den Transportelementen 10 sind. Wie ersichtlich, könnte im Zustand der Figur 3a mittels gleichzeitiger Bewegung der Antriebselemente 50 die Transportvorrichtung insgesamt nach links oder rechts verschoben werden, ohne dass eine Zinke 22a oder 22b mit dem Objekt 50 kollidieren würde. Das Objekt bzw. Transportgut 70 ist beispielsweise ein Behälter, wobei der äußere Kreis die Bodenfläche repräsentiert, während der innere Kreis die weiter oben und in etwa auf der Höhe der Zinken 22a, 22b bzw. leicht darüber liegende Öffnung repräsentiert.

Zum Klemmen des Transportguts 70 werden nunmehr die beiden linken Antriebselemente 50 im Wesentlichen in ihrer Position belassen, während die beiden rechten Antriebselemente 50 ein wenig bezogen auf Figuren 3a und 3b nach rechts bewegt werden.

Da sich damit der Abstand zwischen den jeweils zwei Transportelementen 10 von Transportrechen 20a und Gegenrechen 20b verändert, ändert sich die Winkelposition der Gelenkstangen 18, die das Transportelement 10 mit dem Verbindungsstück 16 verbinden.

Dadurch entfernen sich die sich parallel zur Transportrichtung erstreckenden Halterungsstange 24a bzw. 24b von Transportrechen 20a bzw. Gegenrechen 20b von den Transportelementen 10, womit sich die Zinken 22a und 22b seitlich am Transportgut 70 vorbei schieben. Dabei müssen die Zinken 22a, 22b nicht zwingend wie in Figur 3a gezeigt, zuvor versetzt zum Transportgut 70 angeordnet sein, sondern durch entsprechende Abstimmung der Bewegung der linken und rechten Transportelemente 10 können die Zinken 22a, 22b, bezogen auf die Figuren 3a und 3b, auch direkt senkrecht nach unten bewegt werden.

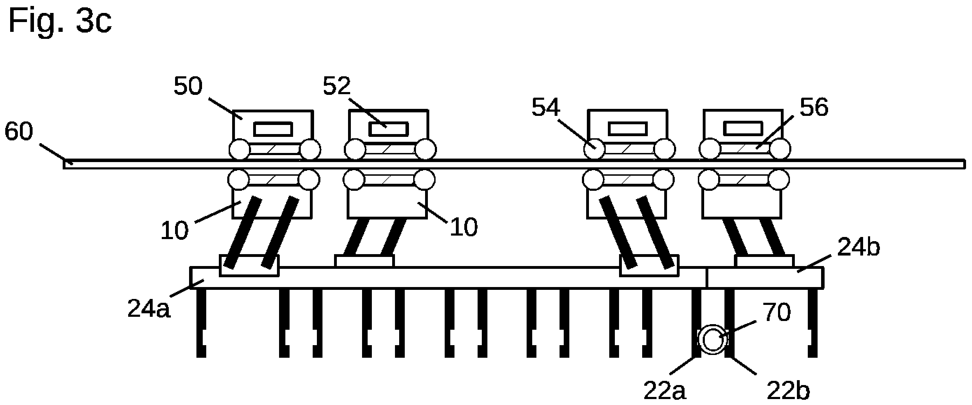

Zum Klemmen des Transportguts 70 werden nunmehr die linken Transportelemente 10 und rechten Transportelemente 10 von Transportrechen 20a und Gegenrechen 20b jeweils zueinander bewegt. Da nunmehr der Abstand der beiden Transportelemente 10 von jeweils Transportrechen 20a und Gegenrechen 20b konstant bleibt, bleiben die sich parallel zur Transportrichtung erstreckenden Halterungsstangen 24a und 24b im selben Abstand zu den Transportelementen 10. Damit verschieben sich einfach nur die Zinken 22a, 22b, und zwar wird der Abstand zwischen ihnen geringer entsprechend der Abstandsverringerung zwischen den Transportelementen 10 von Transportrechen 20a und Gegenrechen 20b zueinander. Wie in Figur 3c gezeigt, kommt es damit zur Klemmung des Transportguts 70.

Sofern die Aufnahmebereiche 28a, 28b von der Form her, beispielsweise durch Ausbildung als Ausnehmungen mit entsprechender Verjüngung und passend zur Form des Transportguts 70 ausgebildet, kommt es beim Klemmen des Transportguts 70 gleichzeitig zu einem leichten Anheben des Transportguts 70. Damit kann das Transportgut 70 bewegt werden, ohne an der Fläche zu schleifen, auf der es zuvor stand.

Insbesondere wäre es nachfolgend auf die Situation in Fig. 3c möglich durch Relativbewegung von linken und rechten Transportelementen 10 von Transportrechen 20a und Gegenrechen 20b jeweils zueinander in etwa umgekehrt zu der Bewegung von Fig. 3a zu Fig. 3b, die Halterungsstangen 24a und 24b bei weiterer Klemmung des Transportguts 70 wieder näher an die Transportelemente 10 heranzubewegen.

Damit könnte dann das nunmehr geklemmte Transportgut 70 an weiterem Transportgut vorbeitransportiert werden, das ähnlich entfernt von den Transportelementen steht wie das Transportgut 70 in Fig. 3a. Damit lässt sich eine flexible Taktung und eine flexible Zufuhr von Transportgut 70 zu unterschiedlichen Bearbeitungsstationen entlang der Transportrichtung realisieren.

Dies ist beispielsweise möglich, wenn es einen Wulst am Transportgut 70 knapp unterhalb der Öffnung gibt und die Aufnahmebereiche 28a, 28b mit ihrem maximal vorspringenden Bereich knapp unterhalb des Wulstes angreifen. Dann wird durch die Klemmwirkung das Transportgut 70 entlang des sich nach oben verjüngenden Bereichs der Aufnahmebereiche 28a, 28b leicht nach oben verschoben.

Wie in den Figuren 3a bis 3c gezeigt, erlaubt das erfindungsgemäße Transportsystem den Betrieb von Transportrechen 20a und Gegenrechen 20b und das Klemmen von Transportgut 70 durch geeignete Parallel- und Relativbewegungen der im Prinzip jeweils separat steuerbaren Antriebselemente 50 auf der Außenseite eines Reinraums.

Dabei ist auch jegliche komplizierte Antriebsvorrichtung oder Antriebsmechanik oder auch nur komplizierte Mechanik innerhalb des Reinraums vermieden, denn die einzige Mechanik innerhalb des Reinraums sind die Rollen 14 und deren Achsen oder Ähnliches sowie die Gelenkstangen 18 und deren Angelenkung an den Transportelementen 10 bzw. den Verbindungsstücken 60. Eventuelle Verbindungselemente zwischen Transportrechen 20a und Gegenrechen 20b, wie beispielsweise Rollen und Lauffläche. Diese Elemente sind jeweils relativ wartungsarm und langlebig.

Hingegen sind die relativ wartungsaufwendigen Motoren der Antriebselemente 50 problemlos zugänglich; insbesondere kann ein defektes Antriebselement 50 auch direkt mittels Überwindung der magnetischen Anziehungskräfte zwischen den Magnetvorrichtungen 12 und 56 entfernt werden und durch ein gleichartiges Antriebselement 50 ersetzt werden.

Damit kann Wartung, Austausch und Reparatur sogar im Betrieb erfolgen während eine größere Charge von Objekten in Reinraum abgefüllt wird. Denn Transportrechen und Gegenrechen müssen lediglich so lange gestoppt werden, wie der Austausch eines Antriebselements 50 und die elektronische Einbindung in die koordinierte Steuerung beim neuen Antriebselement 50 braucht. Dies kann ein Zeitraum von unterhalb von einer Minute sein. Eventuell kann außen am Reinraum auch eine automatische Vorrichtung zum Austausch von entsprechenden Antriebselementen vorgesehen sein.

Eine erfindungsgemäße Transportvorrichtung muss allerdings nicht zwingend mit den gezeigten Antriebselementen 50 betrieben werden. Grundsätzlich ist jeder Art von Antriebselement oder Antriebssystem denkbar, die eine entsprechende unabhängige Ansteuerung der Transportelemente 10 zur Erzeugung der verschiedenen Bewegungsabläufe ermöglicht; hierfür sind insbesondere alle in der Anmeldung DE 10 2018 211 839.6 offenbarten Antriebsmethoden und Antriebselemente denkbar.

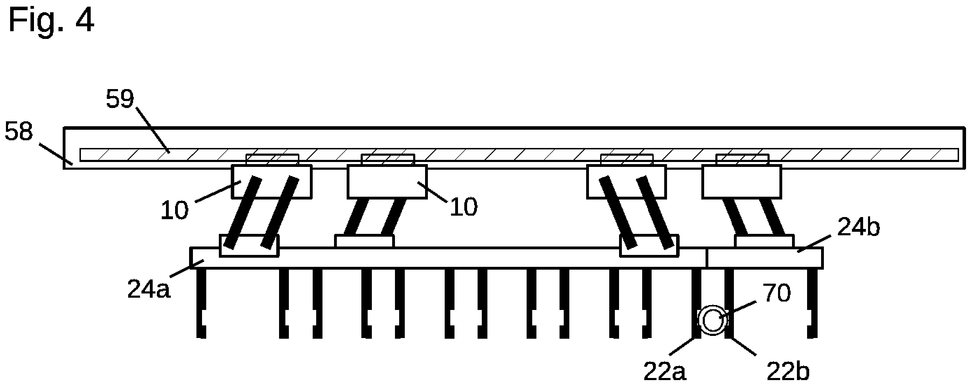

Ein Beispiel für ein anderes Antriebssystem ist in Figur 4 gezeigt, in dem das Antriebssystem ein Linearantrieb ist bzw. einen solchen umfasst, wobei die Transportelemente 10 auf einer Schiene 58 laufen, die einen entsprechenden Magnetantrieb 59 beinhaltet.

## Patentansprüche

1. Transportvorrichtung für ein Transportgut (70) umfassend:
- einen Transportrechen (20a) mit mindestens einem Zinken (22a) und
- einen Gegenrechen (20b) mit mindestens einem Zinken (22b),
wobei der Gegenrechen (20b) in Transportrichtung relativ zu dem Transportrechen (20a) verstellbar ist, um ein Transportgut zwischen dem mindestens einen Zinken (22a) des Transportrechens (20a) und dem mindestens einen Zinken (22b) des Gegenrechens (20b) zu klemmen,
wobei mindestens entweder der Transportrechen (20a) oder der Gegenrechen (20b) mit einem für eine rein lineare Bewegung in oder gegen Transportrichtung geeigneten beweglichen Transportelement (10) verbunden ist, wobei ein Antriebssystem vorgesehen ist, mit dem das Transportelement (10) in einer rein linearen Weise in oder gegen die Transportrichtung bewegbar ist,
wobei sowohl Transportrechen (20a) als auch Gegenrechen (20b) mit mindestens zwei der Transportelemente (10) verbunden sind, wobei Transportelemente (10) von Transportrechen (20a) und Gegenrechen (20b) auf versetzt parallel verlaufenden Strecken in Transportrichtung (10) beweglich sind,
wobei das Antriebssystem einen Linearantrieb (59) umfasst,
**dadurch gekennzeichnet,**
**dass** mindestens entweder der Transportrechen oder der Gegenrechen mit zwei für eine rein lineare Bewegung in und/oder gegen Transportrichtung geeigneten und relativ zueinander beweglichen Transportelementen verbunden ist, wobei ein Antriebssystem vorgesehen ist, mit dem die Transportelemente in einer rein linearen Weise in und/oder gegen die Transportrichtung bewegbar sind, und
**dass** das Antriebssystem ein Antriebselement (50) umfasst, mit dem das Transportelement (10) nicht verbunden ist und mit dem bzw. von dem das Transportelement (10) nur mittels berührungsloser Distanzkräfte gekoppelt bzw. angetrieben ist.

2. Transportvorrichtung für ein Transportgut (70) Anspruch 1, **dadurch gekennzeichnet, dass** Transportrechen (20a) und Gegenrechen (20b) mit mindestens zwei Transportelementen (10) verbunden sind, wobei diese relativ zueinander beweglich sind.

3. Transportvorrichtung für ein Transportgut (70) nach einem der vorhergehenden Ansprüche, **dadurch gekennzeichnet, dass** das Transportelement (10) und der Transportrechen (20a) bzw. der Gegenrechen (20b) über mindestens eine, bevorzugt zwei Gelenkstangen miteinander verbunden sind, die sowohl an Transportelement als auch an Transportrechen bzw. Gegenrechen drehbar gelenkig befestigt ist/sind mit einer Drehachse senkrecht zu der Transportrichtung und bevorzugt senkrecht zu einer Fläche, auf der das Transportgut mittels der Transportvorrichtung abstellbar ist.

4. Transportvorrichtung für ein Transportgut (70) nach einem der vorhergehenden Ansprüche, **dadurch gekennzeichnet, dass** Transportrechen (20a) und Gegenrechen (20b) miteinander mit Möglichkeit einer Relativbewegung zueinander verbunden sind.

5. Transportvorrichtung für ein Transportgut (70) nach einem der Ansprüche 1 bis 4, **dadurch gekennzeichnet, dass** Transportrechen (20a) und Gegenrechen (20b) nicht miteinander verbunden sind, wobei Transportrechen und Gegenrechen gegebenenfalls vorzugsweise unabhängig voneinander in Transportrichtung beweglich sind.

6. Transportvorrichtung für ein Transportgut (70) nach einem der vorhergehenden Ansprüche, **dadurch gekennzeichnet, dass** Transportrechen (20a) und/oder Gegenrechen (20b) eine sich parallel zur Transportrichtung erstreckende Halterungsstange umfasst, von der aus sich bevorzugt die Zinken (22a, 22b) orthogonal zur Transportrichtung erstrecken.

7. Transportvorrichtung für ein Transportgut (70) nach einem der vorhergehenden Ansprüche, **dadurch gekennzeichnet, dass** die Zinken (22a, 22b) einen länglichen Halterungsstangenabschnitt (27a, 27b) und einen Aufnahmebereich (28a, 28b) aufweisen, in dem sich die Zinken in einer Richtung orthogonal zur länglichen Erstreckungsrichtung verjüngen.

8. System umfassend eine Transportvorrichtung nach einem der vorhergehenden Ansprüche und einen Reinraum, wobei Transportrechen (20a), Gegenrechen (20b) und Transportelement (10) innerhalb des Reinraums angeordnet sind.

9. System nach Anspruch 8, wobei das Antriebselement (50) der Transportvorrichtung außerhalb des Reinraums angeordnet ist.

10. System bevorzugt nach Anspruch 8 oder 9 umfassend mehrere Transportvorrichtungen nach einem der vorhergehenden Ansprüche 1 bis 9.

11. Verfahren zum Betrieb einer Transportvorrichtung nach einem der Ansprüche 1 bis 7 oder zum Betrieb eines Systems nach einem der Ansprüche 8 bis 10, wobei mindestens entweder der Transportrechen (20a) oder der Gegenrechen (20b) mit zwei für eine rein lineare Bewegung in oder gegen Transportrichtung geeigneten beweglichen Transportelementen (10) verbunden sind, um mindestens ein Objekt und/oder ein Transportgut (70) zu bewegen, das auf einer Transportfläche ist, wobei die Transportfläche bevorzugt orthogonal zur Transportrichtung beabstandet zu einem Bereich ist, zu dem die Transportelemente hin bewegbar sind, **dadurch gekennzeichnet, dass** für den Transport des Transportgutes (70) zwischen Anfahren des zu transportierenden Transportgutes und Freigeben des Transportgutes sowohl synchrone Bewegungen der zwei Transportelemente von Transportrechen und/oder Gegenrechen erfolgen als auch relative Bewegungen zueinander und/oder dass in mindestens einem Schritt eine synchrone Bewegung der Transportelemente von Transportrechen und/oder Gegenrechen in und/oder gegen die Transportrichtung erfolgt und in mindestens einem Schritt eine relative Bewegung der Transportelemente von Transportrechen und/oder Gegenrechen zueinander erfolgt.

12. Verfahren nach Anspruch 11, **dadurch gekennzeichnet, dass** das Verfahren einen, mehrere oder alle der Schritte umfasst, bevorzugt in alphabetischer Reihenfolge:
a) synchrone und/oder parallele Bewegung der zwei Transportelemente von Transportrechen und/oder Gegenrechen bis die Zinken benachbart zu dem Transportgut (70) sind und/oder in einem Bereich zwischen Transportgut (70) und Transportrechen und/oder Gegenrechen und/oder Transportelementen sind;
b) relative Bewegung der zwei Transportelemente von Transportrechen und/oder Gegenrechen zueinander bis die Zinken einen Abstand von den Transportelementen haben, der dem Abstand zwischen Transportgut (70) und Transportelementen entspricht;
c) relative Bewegung der der zwei Transportelemente von Transportrechen und/oder Gegenrechen zueinander bis die Zinken das Transportgut (70) klemmen;
d) relative Bewegung der der zwei Transportelemente von Transportrechen und/oder Gegenrechen zueinander bis der Abstand von Transportgut (70) und/oder der Zinken zu den Transportelementen einen gewünschten Wert erreicht, bevorzugt einen Wert so dass die Zinken nicht mit weiterem auf der Transportfläche befindlichen Transportgut (70) kollidieren können;
e) synchrone und/oder parallele Bewegung der zwei Transportelemente von Transportrechen und/oder Gegenrechen bis die Zinken benachbart zu einer Abstellfläche oder einem Bereich der Transportfläche, auf der das Transportgut abzustellen ist, oder zu einer Übergabe- und/oder Arbeitsstation sind, an oder in der das Transportgut (70) zu übergeben und/oder zu bearbeiten und/oder abzustellen ist, oder zu einem Übergabebereich sind, in dem das Transportgut (70) zu übergeben und/oder zu bearbeiten und/oder abzustellen ist;
f) relative Bewegung der zwei Transportelemente von Transportrechen und/oder Gegenrechen zueinander bis das Transportgut (70) benachbart und/oder über der Abstellfläche, dem Bereich der Transportfläche, der Übergabe- und/oder Arbeitsstation und/oder dem Übergabebereich ist;
g) relative Bewegung der zwei Transportelemente von Transportrechen und/oder Gegenrechen zueinander bis das Transportgut (70) freigegeben ist; und
h) relative Bewegung der zwei Transportelemente von Transportrechen und/oder Gegenrechen zueinander bis die Zinken nah genug an den Transportelemente sind, um eine Kollision mit dem Transportgut (70) und/oder anderen Elementen zu vermeiden;
wobei bevorzugt nach Schritt h) Schritt a) wieder ausgeführt wird bezüglich eines weiteren Transportguts, wobei die Schritte bevorzugt auf mehrere Transportgüter (70) gleichzeitig angewendet werden, um mehrere Transportgüter gleichzeitig zu bewegen, wobei bevorzugt das Verfahren einen, mehreren und/oder alle diese Schritte umfasst.

## Claims

1. A transport device for an item (70) to be transported, the device comprising:
- a transport rake (20a) having at least one tine (22a); and
- a counter rake (20b) having at least one tine (22b),
the counter rake (20b) being adjustable relative to the transport rake (20a) in a transport direction in order to clamp an item to be transported between the at least one tine (22a) of the transport rake (20a) and the at least one tine (22b) of the counter rake (20b),
wherein at least either the transport rake (20a) or the counter rake (20b) is connected to a movable transport element (10) that is suitable for a purely linear movement in or against the transport direction, a drive system being provided by means of which the transport element (10) can be moved in a purely linear manner in or against the transport direction,
wherein both the transport rake (20a) and the counter rake (20b) are connected with at least to of the transport elements (10), wherein transport elements (10) of the transport rake (20a) and the counter rake (20b) are movable in the transport direction (10) on paths that extend so as to be offset in parallel,
wherein the drive system comprises a linear drive (59),
**characterized in that**
at least either the transport rake or the counter rake is connected to two transport elements that are suitable for a purely linear movement in and/or against the transport direction and are movable relative to one another, a drive system being provided by means of which the transport elements can be moved in a purely linear manner in and/or against the transport direction, and
that the drive system comprises a drive element (50), with which the transport element (10) is not connected and with and by which the transport element (10) can be connected and driven, respectively, only via touch-less distance forces.

2. The transport device for an item (70) to be transported according to claim 1, **characterized in that** the transport rake (20a) and the counter rake (20b) are connected to at least two transport elements (10), said transport elements being movable relative to one another.

3. The transport device for an item (70) to be transported according to any of the preceding claims, **characterized in that** the transport element (10) and the transport rake (20a) or the counter rake (20b), respectively, are interconnected via at least one, preferably two articulated rods, which is/are rotatably fastened in an articulated manner both to the transport element and to the transport rake or the counter rake, respectively, with an axis of rotation perpendicular to the transport direction and preferably perpendicular to a plane, on which the item to be transported can be placed by means of the transport device.

4. The transport device for an item (70) to be transported according to any of the preceding claims, **characterized in that** the transport rake (20a) and the counter rake (20b) are interconnected with the possibility of a relative movement.

5. The transport device for an item (70) to be transported according to any of claims 1 to 4, **characterized in that** the transport rake (20a) and the counter rake (20b) are not interconnected, wherein the transport rake and the counter rake are movable independently from one another in the transport direction, if applicable.

6. The transport device for an item (70) to be transported according to any of the preceding claims, **characterized in that** the transport rake (20a) and/or the counter rake (20b) comprises a support rod that extends in parallel with the transport direction, from which support rod preferably the tines (22a, 22b) extend orthogonally to the transport direction.

7. The transport device for an item (70) to be transported according to any of the preceding claims, **characterized in that** the tines (22a, 22b) have an elongate support rod portion (27a, 27b) and a receiving region (28a, 28b) in which the tines taper in a direction orthogonal to an elongate direction of extension.

8. A system, comprising a transport device according to any of the preceding claims and a clean room, wherein the transport rake (20a),the counter rake (20b) and the transport element (10) are arranged inside the clean room.

9. The system according to claim 8, wherein the drive element (50) of the transport device is arranged outside the clean room.

10. A system, preferably according to claim 8 or 9, comprising a plurality of transport devices according to any of the preceding claims 1 to 9.

11. A method for operating a transport device according to any of claims 1 to 7 or for operating a system according to any of claims 8 to 10, wherein at least either the transport rake (20a) or the counter rake (20b) is connected to two movable transport elements (10) that are suitable for a purely linear movement in or against the transport direction for moving at least one object and/or an item (70) to be transported that is on a transport surface, wherein the transport surface preferably is orthogonal to the transport direction spaced apart from a region, to which the transport elements are movable, **characterized in that** for transporting the item (70) to be transported, between approaching the item to be transported and releasing the item to be transported, the two transport elements of the transport rake and/or of the counter rake move both synchronously and relative to one another and/or in at least one step, the transport elements of the transport rake and/or of the counter rake move synchronously in and/or against the transport direction and in at least one step the transport elements of the transport rake and/or of the counter rake move relative to one another.

12. The method according to claim 11, **characterized in that** the method comprises one, several or all of the following steps, preferably in alphabetical order:
a) moving the two transport elements of the transport rake and/or of the counter rake synchronously or in parallel until the tines are adjacent to the item (70) to be transported and/or in a region between the item (70) to be transported and the transport rake and/or the counter rake and/or the transport elements;
b) moving the two transport elements of the transport rake and/or of the counter rake relative to one another until the tines are at a distance from the transport elements which corresponds to the distance between the item (70) to be transported and the transport elements;
c) moving the two transport elements of the transport rake and/or of the counter rake relative to one another until the tines clamp the item (70) to be transported;
d) moving the two transport elements of the transport rake and/or of the counter rake relative to one another until the distance from the item (70) to be transported and/or the tines to the transport elements reaches a desired value, preferably a value such that the tines cannot collide with further items (70) to be transported placed on the transport surface;
e) moving the two transport elements of the transport rake and/or of the counter rake synchronously and/or in parallel until the tines are adjacent to a placement surface or a region of the transport surface on which the item to be transported is to be placed, or to a transfer station and/or work station at or in which the item (70) to be transported is to be transferred and/or processed and/or placed, or to a transfer region in which the item (70) to be transported is to be transferred and/or processed and/or placed;
f) moving the two transport elements of the transport rake and/or of the counter rake relative to one another until the item (70) to be transported is adjacent to and/or above the placement surface, the region of the transport surface, the transfer station and/or work station and/or the transfer region;
g) moving the two transport elements of the transport rake and/or of the counter rake relative to one another until the item (70) to be transported is released; and
h) moving the two transport elements of the transport rake and/or of the counter rake relative to one another until the tines are close enough to the transport elements to avoid a collision with the item (70) to be transported and/or other elements,
wherein preferably after step h), step a) is repeated with respect to a further item to be transported, wherein preferably the steps are applied simultaneously to a plurality of items (70) to be transported in order to move a plurality of items to be transported simultaneously, wherein preferably the method comprises one, several and/or all of said steps.

## Revendications

1. Dispositif de transport pour une marchandise à transporter (70) comprenant :
- un râteau de transport (20a) avec au moins une dent (22a) et
- un contre-râteau (20b) avec au moins une dent (22b),
dans lequel le contre-râteau (20b) est réglable dans la direction de transport par rapport au râteau de transport (20a) dans la direction de transport afin de serrer une marchandise à transportér entre ladite au moins une dent (22a) du râteau de transport (20a) et ladite au moins une dent (22b) du contre-râteau (20b),
dans lequel au moins ou le râteau de transport (20a) ou le contre-râteau (20b) est relié à un élément de transport (10) mobile adapté à un mouvement purement linéaire dans ou contre la direction de transport, un système d'entraînement étant prévu, avec lequel l'élément de transport (10) peut être déplacé de manière purement linéaire dans ou contre la direction de transport, dans lequel le râteau de transport (20a) et le contre-râteau (20b) sont reliés à au moins deux des éléments de transport (10), les éléments de transport (10) du râteau de transport (20a) et du contre-râteau (20b) pouvant se déplacer sur des trajectoires décalées parallèles dans la direction de transport (10),
dans lequel le système d'entraînement comprend un entraînement linéaire (59), **caractérisé en ce qu'**au moins ou le râteau de transport ou le contre-râteau est relié à deux éléments de transport adaptés à un mouvement purement linéaire dans et/ou contre la direction de transport et mobiles l'un par rapport à l'autre, dans lequel un système d'entraînement est prévu, avec lequel les éléments de transport peuvent être déplacés de manière purement linéaire dans et/ou contre la direction de transport, et
**en ce que** le système d'entraînement comprend un élément d'entraînement (50) auquel l'élément de transport (10) n'est pas relié et auquel ou à partir duquel l'élément de transport (10) est couplé ou entraîné uniquement au moyen de forces de distance sans contact.

2. Dispositif de transport pour une marchandise à transporter (70) selon la revendication 1, **caractérisé en ce que** le râteau de transport (20a) et le contre-râteau (20b) sont reliés à au moins deux éléments de transport (10), ceux-ci étant mobiles les uns par rapport aux autres.

3. Dispositif de transport pour une marchandise à transporter (70) selon l'une des revendications précédentes, **caractérisé en ce que** l'élément de transport (10) et le râteau de transport (20a) ou le contre-râteau (20b) sont reliés entre eux par au moins une, de préférence deux tiges articulées qui sont fixées de manière pivotante à la fois à l'élément de transport et au râteau de transport ou au contre-râteau, avec un axe de rotation perpendiculaire à la direction de transport et de préférence perpendiculaire à une surface sur laquelle la marchandise à transporter peut être déposé à l'aide du dispositif de transport.

4. Dispositif de transport pour une marchandise à transporter (70) selon l'une des revendications précédentes, **caractérisé en ce que** le râteau de transport (20a) et le contre-râteau (20b) sont reliés entre eux avec possibilité d'un mouvement relatif les uns par rapport aux autres.

5. Dispositif de transport pour une marchandise à transporter (70) selon l'une des revendications 1 à 4, **caractérisé en ce que** le râteau de transport (20a) et le contre-râteau (20b) ne sont pas reliés entre eux, dans lequel le râteau de transport et le contre-râteau peuvent être déplacés de préférence indépendamment les uns des autres dans la direction de transport.

6. Dispositif de transport pour une marchandise à transporter (70) selon l'une des revendications précédentes, **caractérisé en ce que** le râteau de transport (20a) et/ou le contre-râteau (20b) comprennent une tige de support s'étendant parallèlement à la direction de transport, à partir de laquelle les dents (22a, 22b) s'étendent de préférence orthogonalement à la direction de transport.

7. Dispositif de transport pour une marchandise à transporter (70) selon l'une des revendications précédentes, **caractérisé en ce que** les dents (22a, 22b) comprennent une partie de tige de support allongée (27a, 27b) et une zone de réception (28a, 28b) dans laquelle les dents se rétrécissent dans une direction orthogonale à la direction d'extension allongée.

8. Système comprenant un dispositif de transport selon l'une des revendications précédentes et une chambre propre, dans lequel le râteau de transport (20a), le contre-râteau (20b) et l'élément de transport (10) sont disposés à l'intérieur de la chambre propre.

9. Système selon la revendication 8, dans lequel l'élément d'entraînement (50) du dispositif de transport est disposé à l'extérieur de la chambre propre.

10. Système selon la revendication 8 ou 9, comprenant plusieurs dispositifs de transport selon l'une des revendications 1 à 9 précédentes.

11. Procédé pour faire fonctionner un dispositif de transport selon l'une des revendications 1 à 7 ou pour faire fonctionner un système selon l'une des revendications 8 à 10, dans lequel au moins ou le râteau de transport (20a) ou le contre-râteau (20b) est relié à deux éléments de transport mobiles (10) adaptés à un mouvement purement linéaire dans ou contre la direction de transport, afin de déplacer au moins un objet et/ou une marchandise à transporter (70) qui se trouve sur une surface de transport, dans lequel la surface de transport est de préférence orthogonale à la direction de transport et espacée d'une zone vers laquelle les éléments de transport peuvent se déplacer, **caractérisé en ce que**, pour le transport de la marchandise à transporter (70) entre le démarrage de la marchandise à transporter et la libération de la marchandise, il est possible d'effectuer aussi bien des mouvements synchrones des deux éléments de transport du râteau de transport et/ou du contre-râteau, que des mouvements relatifs les uns par rapport aux autres et/ou qu'au moins une étape comprend un mouvement synchrone des éléments de transport du râteau de transport et/ou du contre-râteau dans et/ou contre la direction de transport et qu'au moins une étape comprend un mouvement relatif des éléments de transport du râteau de transport et/ou du contre-râteau les uns par rapport aux autres.

12. Procédé selon la revendication 11, **caractérisé en ce que** le procédé comprend une, plusieurs ou toutes les étapes, de préférence dans l'ordre alphabétique :
a. un mouvement synchrone et/ou parallèle des deux éléments de transport du râteau de transport et/ou du contre-râteau jusqu'à ce que les dents soient adjacentes à la marchandise à transporter (70) et/ou se trouvent dans une zone entre la marchandise à transporter (70) et le râteau de transport et/ou le contre-râteau et/ou les éléments de transport ;
b. un mouvement relatif des deux éléments de transport du râteau de transport et/ou du contre-râteau l'un par rapport à l'autre jusqu'à ce que les dents aient un écart par rapport aux éléments de transport qui correspond à l'écart entre la marchandise à transporter (70) et les éléments de transport ;
c. un mouvement relatif des deux éléments de transport du râteau de transport et/ou du contre-râteau l'un par rapport à l'autre jusqu'à ce que les dents serrent la marchandise à transporter (70) ;
d. un mouvement relatif des deux éléments de transport du râteau de transport et/ou du contre-râteau l'un par rapport à l'autre jusqu'à ce que la distance entre la marchandise à transporter (70) et/ou les dents et les éléments de transport atteigne une valeur souhaitée, de préférence une valeur telle que les dents ne puissent pas entrer en collision avec d'autres marchandises à transporter (70) se trouvant sur la surface de transport ;
e. un mouvement synchrone et/ou parallèle des deux éléments de transport du râteau de transport et/ou du contre-râteau jusqu'à ce que les dents adjacentes à une surface de dépôt ou à une zone de la surface de transport sur laquelle la marchandise à transporter doit être déposée ou à une station de transfert et/ou de travail dans laquelle la marchandise à transporter (70) doit être transférée et/ou traitée et/ou déposée, ou à une zone de transfert dans laquelle la marchandise à transporter (70) doit être transférée et/ou traitée et/ou déposée ;
f. un mouvement relatif des deux éléments de transport du râteau de transport et/ou du contre-râteau l'un par rapport à l'autre jusqu'à ce que la marchandise à transporter (70) se trouve à proximité et/ou au-dessus de la surface de dépôt, de la zone de la surface de transport, du poste de transfert et/ou de travail et/ou de la zone de transfert ;
g. un mouvement relatif des deux éléments de transport du râteau de transport et/ou du contre-râteau l'un par rapport à l'autre jusqu'à ce que la marchandise à transporter (70) soit libérée ; et
h. un mouvement relatif des deux éléments de transport du râteau de transport et/ou du contre-râteau l'un par rapport à l'autre jusqu'à ce que les dents soient suffisamment proches des éléments de transport pour éviter une collision avec la marchandise à transporter (70) et/ou d'autres éléments ;
dans lequel l'étape a) est de préférence exécutée à nouveau après l'étape h) pour une autre marchandise à transporter, les étapes étant de préférence appliquées simultanément à plusieures marchandises à transporter (70) afin de déplacer plusieures marchandises à transporter simultanément, le procédé comprenant de préférence une, plusieurs et/ou toutes ces étapes.
